# EUROPÄISCHE PATENTANMELDUNG

(11) **EP 3 323 323 A1**
(43) Veröffentlichungstag der Anmeldung: **23.05.2018**
(21) Anmeldenummer: 17202054.7
(22) Anmeldetag: 16.11.2017
(51) Int. Cl.: A47J 19/02

(54) **ZITRUSPRESSE**

(30) Priorität: 16.11.2016 DE 102016122059
(71) Anmelder: Hönes, Manfred, 73066 Uhingen (DE)
(72) Erfinder: Hönes, Manfred, 73066 Uhingen (DE); Härer, Martin, 73655 Plüderhausen (DE)
(74) Vertreter: DREISS Patentanwälte PartG mbB

(57) **Zusammenfassung**

Es wird eine Zitruspresse (2) zum Pressen einer Scheibe (30) einer Zitrusfrucht vorgeschlagen. Ein Einlegeabschnitt (8) einer Auffangschale (4) gibt einen Raum zum Einlegen der Scheibe (30) frei. Ein zumindest abschnittsweise innerhalb der Auffangschale (4) angeordnetes Presselement (6) ist entlang einer Pressachse (14) in Richtung des Einlegeabschnitts (8) führbar.

## Beschreibung

Die Erfindung betrifft eine Zitruspresse nach dem Oberbegriff des Anspruchs 1.

Zitruspressen sind allgemein bekannt. Die DE 2949836 A1 offenbart beispielsweise eine Zitruspresse mit einem zur Aufnahme eines Zitronenschnitts bestimmten, mit einem vertikalen Wand versehenen Unterteil und mit einem zum Ausüben eines Pressdruckes auf den eingelegten Zitronenschnitts bestimmten Oberteil, welches am Unterteil um eine Gelenksachse schwenkbar gelagert ist.
Dass der Erfindung zugrunde liegende Problem wird durch eine Zitronenpresse nach dem Anspruch 1 gelöst.

Es wird eine Zitruspresse mit einem Einlegeabschnitt einer Auffangschale vorgeschlagen. Der Einlegeabschnitt gibt einen Raum zum Einlegen einer Scheibe einer Zitrusfrucht frei. Ein zumindest abschnittsweise innerhalb der Auffangschale angeordnetes Presselement ist entlang einer Pressachse in Richtung des Einlegeabschnitts führbar. Durch diese lineare Zuführung des Presselements in Richtung des Einlegeabschnitts erfolgt eine Pressung der Scheibe der Zitrusfrucht bevorzugt im Bereich des Fruchtfleischs. Insbesondere ergibt sich vorteilhaft, dass das Presselement zunächst auf das Fruchtfleisch trifft und erst nach der Quetschung des Fruchtfleisches auf die Schale der Scheibe trifft. Des Weiteren ermöglicht die Auffangschale, dass der erzeugte Saft zur weiteren Verwendung zur Verfügung steht und zwar unabhängig vom Zeitpunkt des Pressvorgangs.

In einer vorteilhaften Ausführungsform weist das Presselement eine Ausnehmung auf, deren Öffnungsrichtung mit einer Öffnungsrichtung der Auffangschale übereinstimmt. Wird die Auffangschale in einer Hand gehalten, so kann in die Ausnehmung der Daumen eingreifen und das Presselement gegenüber der Auffangschale verschieben. Die Bedienung der Zitruspresse wird somit vereinfacht.
In einer vorteilhaften Ausführungsform schließen sich an den Einlegeabschnitt der Auffangschale zwei laterale Führungsabschnitte an, wobei das Presselement zu der Führung entlang der Pressachse mittels der lateralen Führungsabschnitte verliersicher an der Auffangschale gelagert ist. Durch die verliersichere Führung mittels der lateralen Führungsabschnitte wird auf einfache Art und Weise die Führung entlang der Pressachse realisiert. Darüber hinaus wird eine Zitruspresse ohne verlierbare Einzelteile geschaffen.

In einer vorteilhaften Ausführungsform weist das Presselement einen konvex ausgebildeten Pressbereich auf, wobei der Einlegeabschnitt einen zu dem Pressbereich korrespondierenden konkav ausgebildeten Gegenlagerbereich aufweist. Damit wird die Kontur der Schale der Scheibe nachempfunden und damit eine Quetschung des Fruchtfleisches verbessert.

In einer vorteilhaften Ausführungsform weist der konvex ausgebildete Pressbereich eine Anzahl von konkav ausgebildeten Presskonturen auf, welche entlang einer gedachten konvexen Hauptkontur aneinandergereiht sind. Damit verbessert sich das Pressergebnis.

In einer vorteilhaften Weiterbildung weisen benachbarte Presskonturen eine gemeinsame Kante auf. Durch die gemeinsamen Kanten wird der Pressvorgang verbessert, da die Kanten in das Fruchtfleisch hineinragen.
In einer vorteilhaften Ausführungsform umfasst ein dem Einlegeabschnitt abgewandter Ausgießbereich der Auffangschale zwei laterale Ausgießabschnitte umfasst. Hierdurch wird der Ausgießvorgang insofern ergonomisch verbessert, als dass die in der Hand befindliche Auffangschale lediglich schräg gestellt werden muss. Des Weiteren führen die lateralen Ausgießabschnitte zu einer kompakteren Zitruspresse. Die Zitruspresse ist mit den lateralen Ausgießabschnitten sowohl für Linkshändler als auch für Rechtshänder geeignet.

Weitere vorteilhafte Ausführungsformen und Merkmale sind in der nachfolgenden Figurenbeschreibung gezeigt. In der Zeichnung zeigen:
Figur 1 eine schematische perspektivische Ansicht einer Zitruspresse;
Figur 2 eine schematische Draufsicht der Zitruspresse; und
Figur 3 eine schematische Schnittansicht der Zitruspresse.

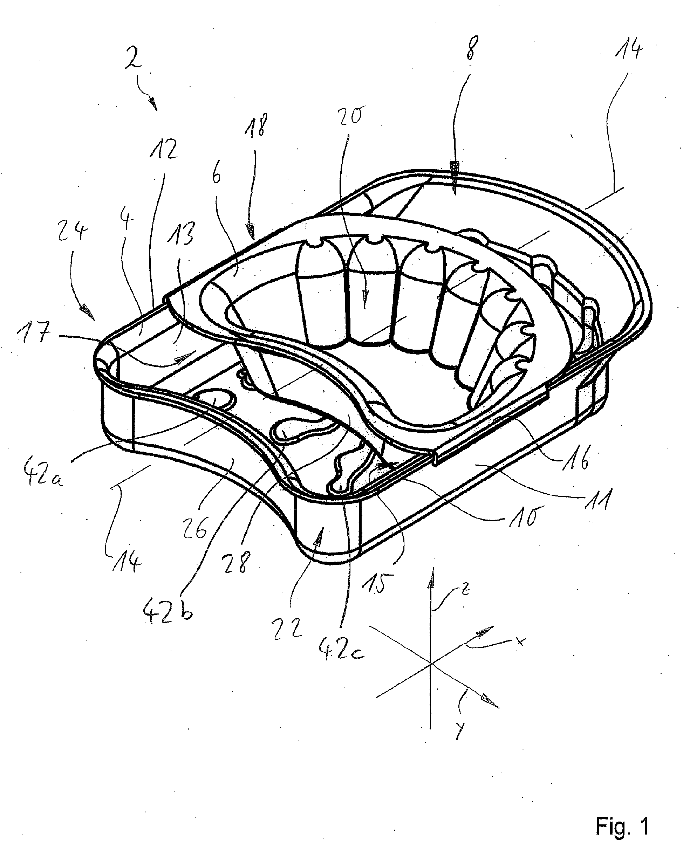

Figur 1 zeigt eine schematische perspektivische Ansicht einer Zitruspresse 2. Die Zitruspresse 2 umfasst eine Auffangschale 4 und ein Presselement 6. Die Auffangschale 4 umfasst einen Einlegeabschnitt 8 zum Einlegen einer Scheibe einer Zitrusfrucht wie beispielsweise einer Zitrone, Orange oder Limette. Die Scheibe ist ein im Wesentlichen halbzylindrischer Schnitz der Frucht.

An den Einlegeabschnitt 8 schließen sich zwei laterale Führungsabschnitte 10 und 12 an, welche zu einer gemeinsamen Pressachse 14 parallel verlaufen. Das Presselement 6 weist zwei Führungsabschnitte 16 und 18 auf, welche die lateralen Führungsabschnitte 10 und 12 der Auffangschale 4 umgreifen, womit das Presselement 6 verliersicher gelagert entlang der Pressachse 14 verschiebbar ist. Selbstverständlich kann die verliersichere Führung auch entfallen, wobei die Auffangschale 4 und das Presselement 6 voneinander entfernbar sind.

Die Auffangschale 4 öffnet sich in z-Richtung. Das Presselement 6 umfasst eine Ausnehmung 20, deren Öffnung ebenfalls in die z-Richtung orientiert ist. Die Auffangschale 4 umfasst zwei laterale Ausgießabschnitte 22 und 24 eines Ausgießbereichs, welche von dem Einlegeabschnitt 8 abgewandt angeordnet sind. Zu einem kontrollierten Ausgießen befindet sich zwischen den Ausgießabschnitten 22 und 24 eine in Richtung des Einlegeabschnitts 8 orientiert gekrümmte Wandung 26 der Auffangschale 4. Eine dem Einlegeabschnitt 8 abgewandte Wandung 28 des Presselements 6 ist zu der Wandung 26 korrespondierend ausgebildet, um die Ausdehnung der Zitruspresse 2 in x-Richtung zu verringern und damit eine kompakte Zitruspresse 2 bereitzustellen.

Entgegen der z-Richtung verjüngt sich das Presselement 6 in einer yz-Ebene. Damit gibt das Presselement 6 zwischen sich und Seitenwänden 11 und 13 Kanäle 15 und 17 frei. Die Kanäle 15 und 17 erlauben einen Abfluss von gepresstem Saft aus dem Einlegeabschnitt 8 hin zu den Ausgießabschnitten 22 und 24. Selbstverständlich kann anstatt zweier Ausgießabschnitte 22 und 24 auch nur ein einziger Ausgießabschnitt beispielsweise mit zentraler Anordnung im Bereich der Pressachse 14 vorgesehen sein.

Der Boden der Auffangschale 4 umfasst Musterabschnitte 42, welche im Einlegeabschnitt 8 eine Zitrusfrucht durch eine Erhebung oder eine Vertiefung im Boden nachahmen und in Richtung des Ausgießbereichs tropfenförmig ausgebildet sind. Diese Musterabschnitte 42 können beispielsweise in den Boden der Auffangschale 4 eingeprägt sein. Die Musterabschnitte 42 bewirken, dass sich dem Nutzer der Zitruspresse 2 deren Zweck und deren Funktion insbesondere durch eine Assoziation zu Zitrusfrüchten oder Zitronen unmittelbar erschließt. Auch kann nach kurzer Betrachtungszeit über die Optik, also die Art und Form der Einbringung der Musterabschnitte 42, der Bereich zum Einlegen des Zitronenteiles und der Sammelbereich des gepressten Safts identifiziert werden. Des Weiteren haben die Musterabschnitte 42 die Aufgabe, das Fließen des gepressten Safts unterhalb des Presselements 6 zu ermöglichen. Dabei dient das geprägte Muster selbst in Form einer Erhöhung als Auflage und Gleitfläche des Presselements 6 und die Vertiefungen zwischen den Prägungen stellen Fließkanäle dar.

Nach einem Einlegen einer Scheibe einer Zitrusfrucht in den Einlegeabschnitt 8 wird das Presselement 6 in Richtung des Einlegeabschnitts 8, also in x-Richtung, geführt und der Bereich mit Fruchtfleisch ausgepresst. Hierzu hält der Verwender die Auffangschale 4 in der Hand und bringt bevorzugt seinen Daumen in die Ausnehmung 20 ein, um mittels des Daumens das Presselement 6 in Richtung des Einlegeabschnitts 8 zu führen und somit das Fruchtfleisch auszupressen. Sowohl die Öffnungsrichtung z der Auffangschale 4 als auch die Öffnungsrichtung z des Presselements 6 sind orthogonal zur Pressrichtung x entlang der Pressachse 14.

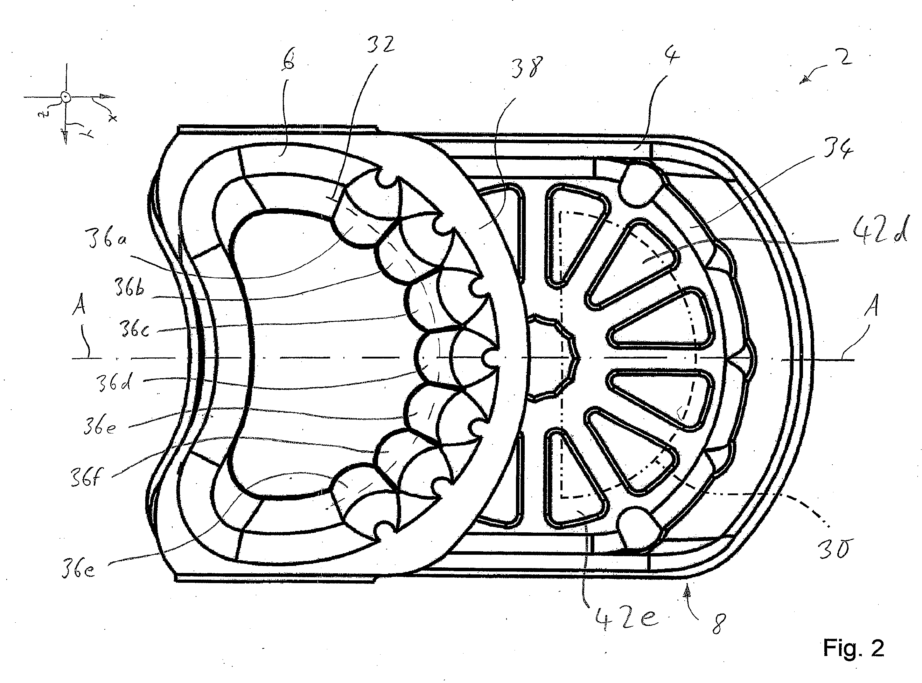

Figur 2 zeigt eine schematische Draufsicht der Zitruspresse 2, wobei das Presselement 6 gegenüber einer in Figur 1 gezeigten Zwischenposition in eine Einlegeposition verschoben ist. In der Einlegeposition gibt das Presselement 6 innerhalb der Auffangschale 4 einen Raum zum Einlegen der Scheibe 30 frei. Wird das Presselement 6 aus der Einlegeposition heraus in Richtung des Einlegeabschnitts 8 verschoben, so trifft ein konvex ausgebildeter Pressbereich 32 des Presselement 6 auf einen ersten Bereich der Scheibe 30 mit Fruchtfleisch. Ein zweiter Bereich der Scheibe 30, welcher die Schale der Zitrusfrucht umfasst, liegt an einem konkav ausgebildeten Gegenlagerbereich 34 des Einlegeabschnitts 8 an. Der Pressbereich 32 und der Gegenlagerbereich 34 korrespondieren derart, als dass sie grob der Form der Schale der Scheibe 30 folgen. So zerquetscht der Pressbereich 32 im Wesentlichen das Fruchtfleisch, um den Saft der Zitrusfrucht auszupressen. Insbesondere wirkt der Pressdruck durch die Ausbildung des Pressbereichs 32 und des Gegenlagerbereichs 34 bevorzugt auf das Fruchtfleisch.

Die Zitruspresse 2 ist zwar entgegen einer z-Richtung gezeigt, allerdings verläuft insbesondere der nicht gezeigte Pressbereich 32 korrespondierend zu der in Figur 2 gezeigten Draufsicht. So weist der Pressbereich 32 eine Anzahl von konkav ausgebildeten Presskonturen 36a bis 36e auf, welche entlang einer gedachten konvexen Hauptkontur gemäß dem gestrichelt eingezeichneten Pressbereich 32 verlaufen. Benachbarte Presskonturen 36 weisen eine gemeinsame Kante auf. Ein Kragen 38 ragt von dem Presselement 6 in Richtung des Einlegeabschnitts 8 ab und bedient insbesondere als Spritzschutz.

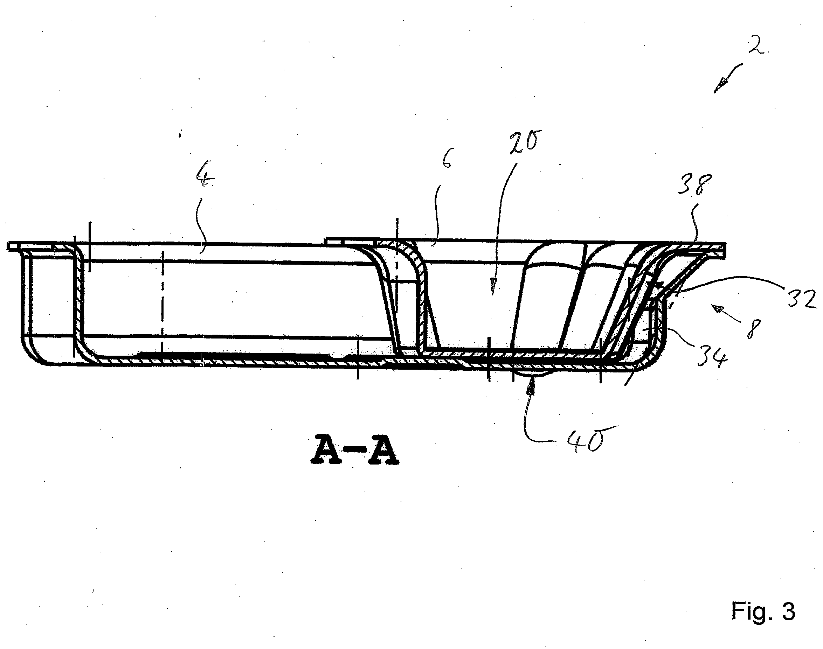

Figur 3 zeigt eine schematische Schnittansicht der Zitruspresse 2 gemäß eines Schnitts A-A aus Figur 2. Im Unterschied zu Figur 2 ist das Presselement 6 in eine Ausgießposition verschoben zu der Auffangschale 4 angeordnet. Hierzu wurde zuvor die Scheibe aus dem Einlegeabschnitt 8 entfernt. Im Bereich des Einlegeabschnitts 8 befindet sich auf der Unterseite der Auffangschale 4 eine Auflage-Beule 40, um eine gewünschte Schräglage der Zitruspresse 2 zu erreichen. Durch die durch die Auflage-Beule 40 bewirkte Schräglage wird das Ansammeln des gepressten Saft in Richtung des Ausgießbereichs bezweckt und ein Zurücklaufen beim Abstellen der Schale in den Pressbereich verhindert.

## Patentansprüche

1. Eine Zitruspresse (2) zum Pressen einer Scheibe (30) einer Zitrusfrucht, **dadurch gekennzeichnet, dass** ein Einlegeabschnitt (8) einer Auffangschale (4) einen Raum zum Einlegen der Scheibe (30) freigibt, und dass ein zumindest abschnittsweise innerhalb der Auffangschale (4) angeordnetes Presselement (6) entlang einer Pressachse (14) in Richtung des Einlegeabschnitts (8) führbar ist.

2. Die Zitruspresse (2) nach Anspruch 1, wobei das Presselement (6) eine Ausnehmung (20) aufweist, deren Öffnungsrichtung (z) mit einer Öffnungsrichtung (z) der Auffangschale (4) übereinstimmt.

3. Die Zitruspresse (2) nach Anspruch 1 oder 2, wobei sich an den Einlegeabschnitt (8) der Auffangschale (4) zwei laterale Führungsabschnitte (10, 12) anschließen, und wobei das Presselement (6) zu der Führung entlang der Pressachse (14) mittels der lateralen Führungsabschnitte (10, 12) verliersicher an der Auffangschale (4) gelagert ist.

4. Die Zitruspresse (2) nach einem der vorstehenden Ansprüche, wobei das Presselement (6) einen konvex ausgebildeten Pressbereich (32) aufweist, und wobei der Einlegeabschnitt (8) einen zu dem Pressbereich (32) korrespondierenden konkav ausgebildeten Gegenlagerbereich (34) aufweist.

5. Die Zitruspresse (2) nach Anspruch 4, wobei der konvex ausgebildete Pressbereich (32) eine Anzahl von konkav ausgebildeten Presskonturen (36) aufweist, welche entlang einer gedachten konvexen Hauptkontur aneinandergereiht sind.

6. Die Zitruspresse (2) nach Anspruch 5, wobei benachbarte Presskonturen (36) eine gemeinsame Kante aufweisen.

7. Die Zitruspresse (2) nach einem der vorstehenden Ansprüche, wobei ein dem Einlegeabschnitt (8) abgewandter Ausgießbereich der Auffangschale (4) zwei laterale Ausgießabschnitte (22, 24) umfasst.
